# EUROPEAN PATENT SPECIFICATION

(11) **EP 2 562 457 B1**
(45) Date of publication and mention of the grant of the patent: **24.12.2014**
(21) Application number: 12007818.3
(22) Date of filing: 15.03.2011
(51) Int. Cl.: F16L 41/04, F16L 41/06, F16L 55/124

(54) **System and process for intercepting and bypassing gases on risers**
System und Verfahren zum Abfangen und Umleiten von Gasen in Steigleitungen
Système et procédé de piquage et de dérivation des gaz sur des colonnes

(30) Priority: 18.03.2010 IT TO20100208
(43) Date of publication of application: 27.02.2013
(62) Divisional of application: 11002140.9
(73) Proprietor: Ravetti, Roberto, 15030 Rosignano Monferrato (AL) (IT)
(72) Inventor: Ravetti, Roberto, 15030 Rosignano Monferrato (AL) (IT)
(74) Representative: Garavelli, Paolo

(56) References cited:
- FR-A1- 2 553 862
- FR-A1- 2 812 709
- US-A- 5 052 431
- US-A- 5 186 199

## Description

The present invention refers to a system and a process for intercepting and bypassing gases on risers.

As known, gas for domestic uses is supplied to various users of a same building through a single duct, called riser, usually made of zinc-coated steel and present on the external walls of houses and buildings, in which the various ducts that reach such users are obtained.

Currently, when it is necessary to perform an intervention on such riser, such as for example when performing works on a certain user deriving from such risers due to leakages or repairs in general, for replacing and connecting gas in the riser tiself, for transferring a user bypass from an old riser to a new riser, etc., the temporary interruption of gas supply is the only alternative for responsibles of suppying companies that allows performing the above works. In particular, the provisions imposed by various national standards, such as for example AEEG, related to replacement or repair of ducts made of grey cast iron with junctions made of hemp/lead or ducts made of non-protected steel, imply the need of transferring user bypasses from the old riser to a new riser. These interventions, whose purpose is avoiding interruptions for customers and limiting supply recovering interventions, are very complex and lengthy, in particular for metering units that are not easily accessible.

Therefore, object of the present invention is solving the above prior art problems by providing a system for intercepting and bypassing gases on risers that allows making a by-pass whose diameter is equal to the low-pressure riser to guarantee a continuous delivery of gas to users.

Another object of the present invention is providing a process for intercepting and bypassing gases on risers that allows making a by-pass with the same diameter of the low-pressure riser to guarantee a continuous delivery of gas to users.

The above and other objects and advantages of the invention, as will result from the following description, are obtained with a system for intercepting and bypassing gases on risers as claimed in claim 1.

Moreover, the above and other objects and advantages of the invention are reached with a process for intercepting and bypassing gases on risers as claimed in claim 12.

Document US 5052431 A discloses a known system for intercepting and bypassing gases on a riser. The system or toolkit of the invention as defined by claim 1 differs from this prior art in that the plugging device-carrying bell is connected to the valve element by quick tightening means, in that the expansion-type plugging device is connected to a kinematic drive passing inside an insertion rod and connected to actuating means at an upper end of the insertion rod, and in that the expansion-type plugging device comprises a rubber ball interposed between a fixed flange and a mobile flange connected to said kinematic drive. Preferred embodiments variations of the present invention are the subject matter of the dependent claims.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:
- Figures 1a and 1b respectively show an exploded side view and an exploded perspective view of a preferred embodiment of a first component of the system according to the present invention;
- Figures 2a and 2b respectively show an exploded side view and an exploded perspective view of an alternative embodiment of a first component of the system according to the present invention;
- Figures 3a and 3b respectively show an exploded side view and an exploded perspective view of a preferred embodiment of a second component of the system according to the present invention;
- Figures 4a and 4b respectively show a side view and a perspective view of a preferred embodiment of a third component of the system according to the present invention;
- Figures 5a and 5b show two side views of a preferred embodiment of a fourth component of the system according to the present invention;
- Figures 6a and 6b show two perspective views of a preferred embodiment of a fifth component of the system according to the present invention in two different operating positions;
- Figures 7a and 7b show two perspective views of a preferred embodiment of a sixth component of the system according to the present invention in two different operating positions;
- Figures 8a and 8b respectively show a side view and a perspective view of an alternative embodiment of the sixth component not according to the present invention;
- Figure 9 shows a schematic side view of a preferred embodiment of the system according to the present invention applied to a riser in a possible use thereof;
- Figures 10a, 10b and 10c show some phases of pipelining of the system according to the present invention in another possible use thereof;
- Figures 11 to 18 are side views showing some steps of the process for the system according to the present invention; and
- Figure 19 shows a sectional side view of the system according to the present invention applied to a riser in a possible use thereof.

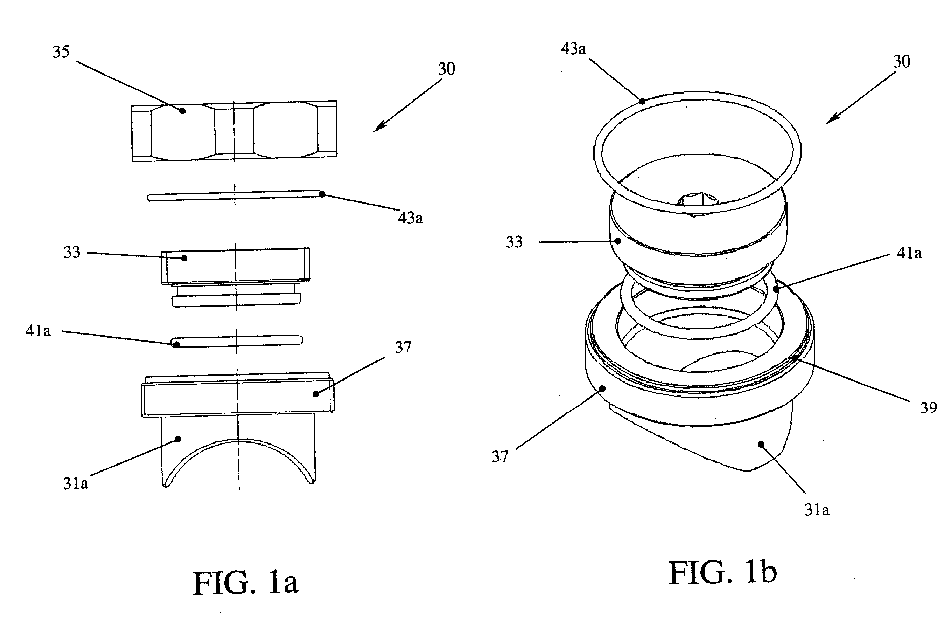

With reference in particular to Figures 1 to 9, it is possible to note that the system 1 for intercepting and bypassing gases on a pressurised riser 2 according to the present invention is composed of:
- at least one shaped fitting 30 to be fastened to such riser 2, for example through welding or mechanical tightening;
- at least one valve element 50 adapted to cooperate with such shaped fitting 30;
- at least one pipe-drilling machine 70 adapted to drill such riser 2 through such valve element 50 and such shaped fitting 30 and to insert an internal plug into such shaped fitting 30;

- at least one bell 90 with visor adapted to cooperate with such valve element 50;
- at least one plugging device-carrying bell 110 adapted to cooperate with such valve element 50;
- at least one expansion-type plugging device 130 adapted to cooperate with such bell 110 and to plug such riser 2 through such bell 110, such valve element 50 and such shaped fitting 30.

With particular reference to Figures 1a and 1b, it is possible to note that a preferred embodiment of the shaped fitting 30 to be fastened to the riser 2 through welding is composed of a shaped body 31a made of steel to be welded to such riser 2, at least one internal plug 33 and at least one external covering cap 35, such shaped body 31a being equipped with a perimeter neck 37 equipped with a first internal threading and a second external threading 39, such first threading being adapted to allow the connection of the internal plug 33, possibly equipped with a trapezoidal threading with a 360° removal at the beginning of its own threading to make its screwing easier, and such second threading 39 being adapted to allow connecting such valve element 50 or such external covering cap 35. Obviously, screwing between the internal plug 33 and its related first threading can occur by interposing at least one first gasket 41a, for example an O-ring: similarly, screwing between the external covering cap 35 and its related second threading 39 can occur by interposing at least one second gasket 43a, also being for example an O-ring.

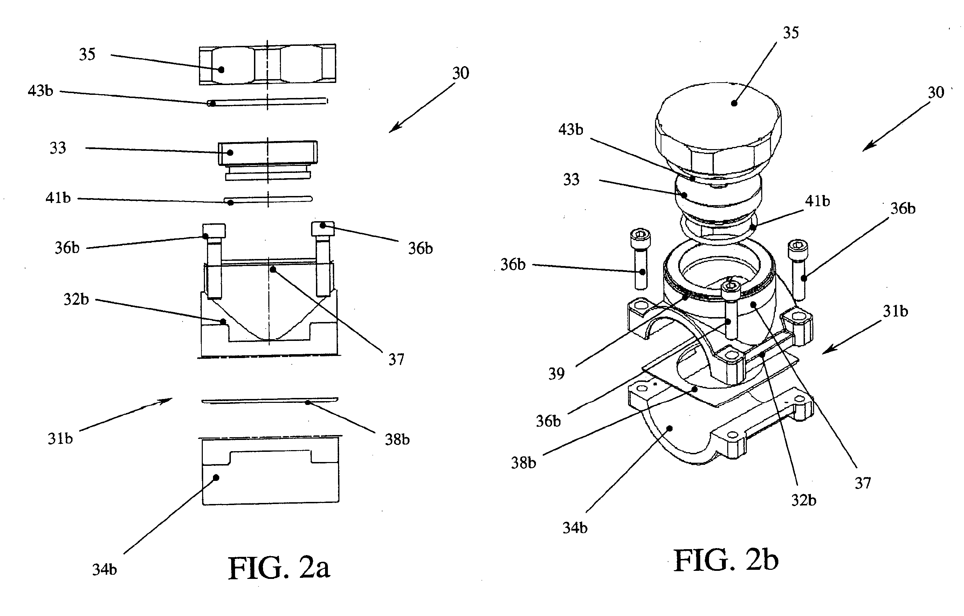

With reference instead to Figures 2a and 2b, it is possible to note that an alternative embodiment of the shaped fitting 30 to be fastened to the riser 2 through mechanical tightening is composed of a joint 31b formed by mechanically joining an upper saddle 32b to a lower saddle 34b around such riser 2 through suitable mechanical means, such as for example screws 36b, at least one internal plug 33 and at least one external covering cap 35, such upper saddle 32b being equipped with a perimeter neck 37 equipped with a first internal threading and a second external threading 39, such first threading being adapted to allow the connection of the internal plug 33, possibly equipped with a trapezoidal threading with a 360° removal at the beginning of its own threading to make its screwing easier, and such second threading 39 being adapted to allow the connection of such valve element 50 or of such external covering cap 35. Obviously, screwing between the internal plug 33 and its related first threading can occur by interposing at least one first gasket 41b, for example an O-ring: similarly, screwing between the external covering cap 35 and its related second threading 39 can occur by interposing at least one second gasket 43b, also being for example an O-ring. Preferably, also between the upper saddle 32b and the lower saddle 34b, at least one flat rubber gasket 38b is interposed, for example of the type in compliance with EN549 standard and resistant to ozone.

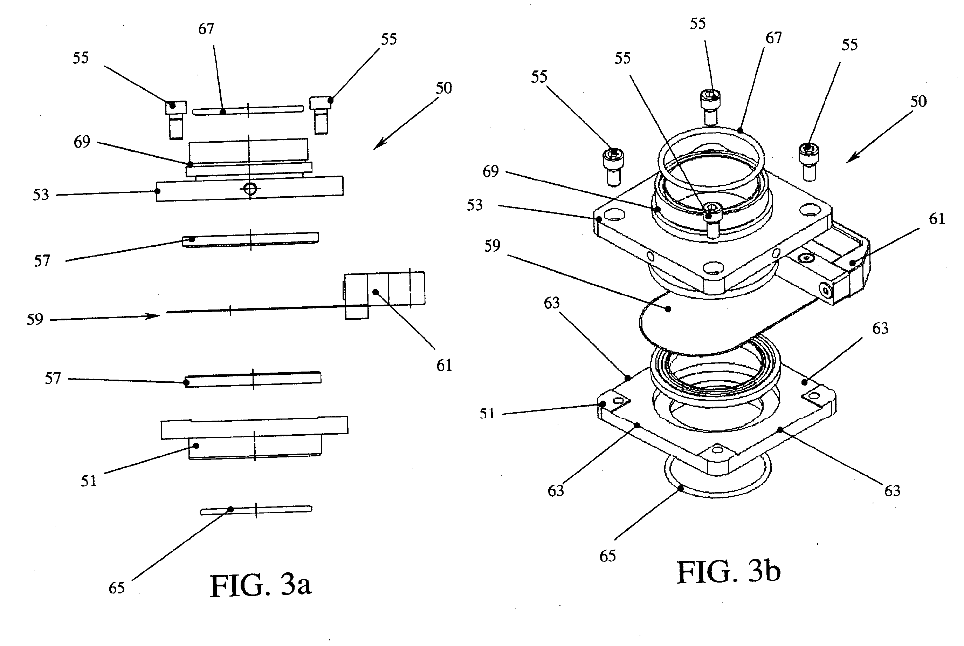

With particular reference to Figures 3a and 3b, it is possible to note that, in a preferred embodiment thereof, such valve element 50 adapted to cooperate with the shaped fitting 30 is an aluminium Ertgal flat valve with a squared shape and chance of being closed on four sides by means of a steel plate: such aspect is very important, since when assembling (screwing), a suitable position for closing can always occur, especially if one works in scarcely accessible places. Such valve element 50 is therefore composed of a lower valve body 51 and an upper valve body 53 joined through suitable mechanical means, such as for example screws 55, and by interposing at least two flat gaskets 57 that guarantee the pressure-seal between the two valve bodies 51, 53 and, being mutually joined on their internal sides, further avoiding that possible drilling chips and other impurities are able to enter inside the valve. Between the lower body 51 and the upper body 53, at least one closing lamina 59 can be inserted, equipped with a handle 61 through one of a plurality of slits 63, each one of such slits 63 being arranged along a different side of the valve element 50 and interposed between the lower body 51 and the upper body 53. Obviously, the connection between the valve element 50 and its related shaped fitting 30 can occur by interposing at least one first gasket 65, for example an O-ring: similarly, the connection between the valve element 50 and pipe-drilling machine 70 or the bell 90 can occur by interposing at least one second gasket 67, also being for example un O-ring.

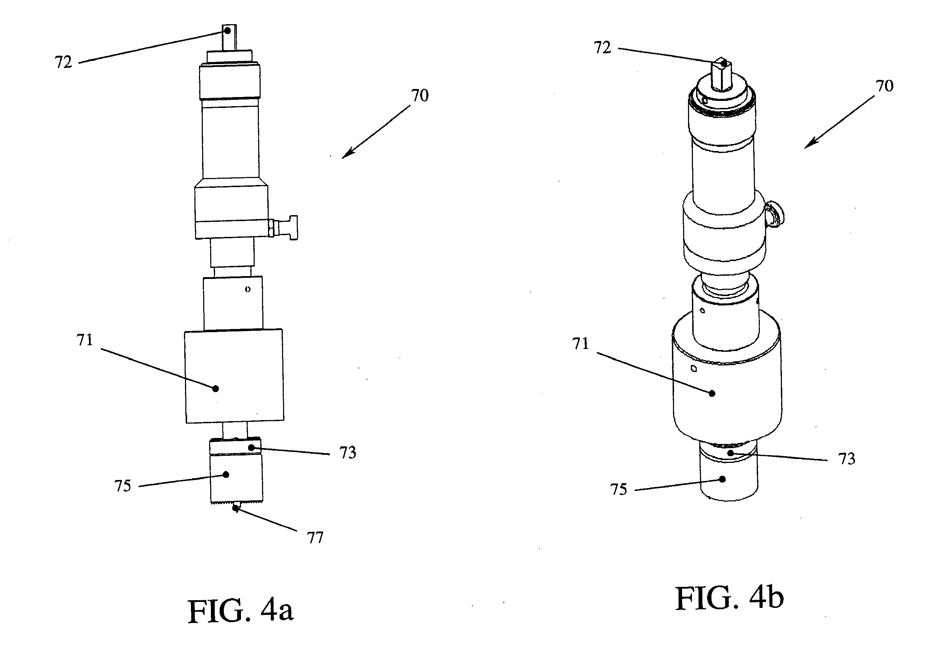

With particular reference to Figures 4a and 4b, it is possible to note that a preferred embodiment of the pipe-drilling machine 70 substantially comprises the drilling mechanisms and systems of pipe-drilling machines known in the art and adapted for such purpose. Moreover, the pipe-drilling machine 70, preferably made of 11S aluminium and Ergal, comprises a plurality of interchangeable connection fittings 71, each one of which being adapted to allow the connection of the pipe-drilling machine 70 with a related and corresponding different valve element 50. The pipe-drilling machine 70 further comprises at least one rotary shaft, actuated for example manually through a jack-type lever to be connected to a suitable connection pin 72, at least one cutter-carrying spindle 73 connected to such shaft and related cutters 75, possibly made of HSS with a centring bit 77 for drilling the riser 2, in addition to at least one plug-carrying shaft that can replace such cutter-carrying spindle 73 for inserting and finally screwing the internal plug 33 inside the respective shaped fitting 30.

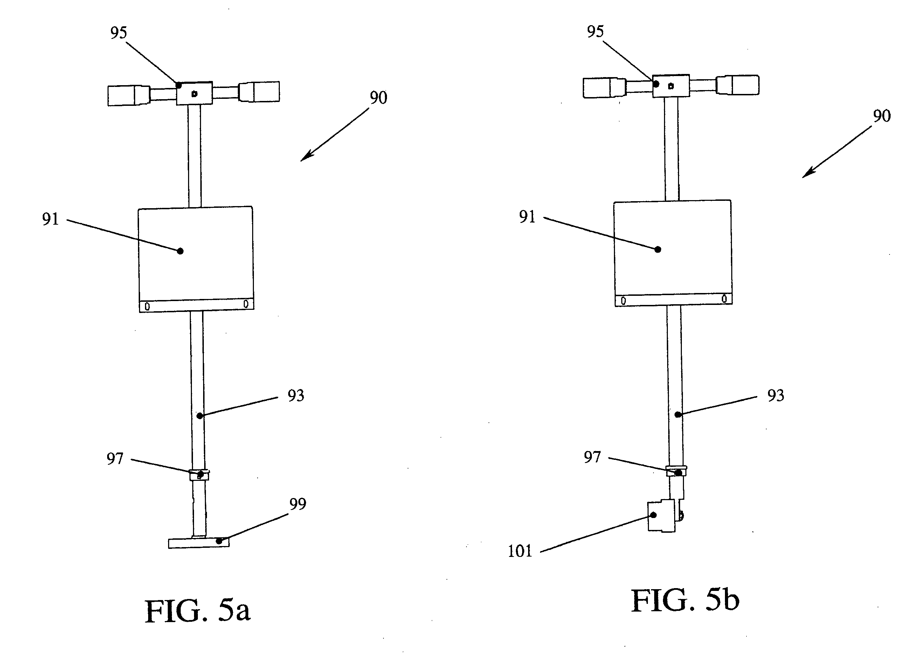

With particular reference to Figures 5a and 5b, it is possible to note that a preferred embodiment of the bell 90 with visor is composed of a central body 91 wholly made of a transparent material, such as for example plexiglass®, and at least one cleaning rod 93 of the shaped fitting 30, such central body 91 being equipped with at least one through-hole through which, preferably by interposing at least one sealing gasket, such as for example an O-ring, it is possible to insert the cleaning rod 93 inside such fitting 30. Such cleaning rod 93 comprises a lower end downstream of the central body 91 equipped with connection means 97 to at least one brush 99 (Figure 5a) or at least one magnet 101 (Figure 5b) and an upper end upstream of the central body 91 equipped with at least one driving handle 95 through which an operator is able to move such brush 99 or such magnet 101 inside the shaped fitting 30 and/or the riser 2. Advantageously, the central body 91 of the bell with visor 90 wholly made of transparent material allows seeing inside the fitting 30 and riser 2 and, using first the magnet and then the brush, preferably made as a circular brush with threads made of brass-coated steel, it is possible to perfectly clean the internal threading of the fitting 30 to make it easier to screw the internal plug 33: such aspect is very important, since, by working with the pipe-drilling machine 70 mainly in a horizontal position, many chips are formed that, being deposited inside the fitting 30, could make it difficult to screw such internal plug 33.

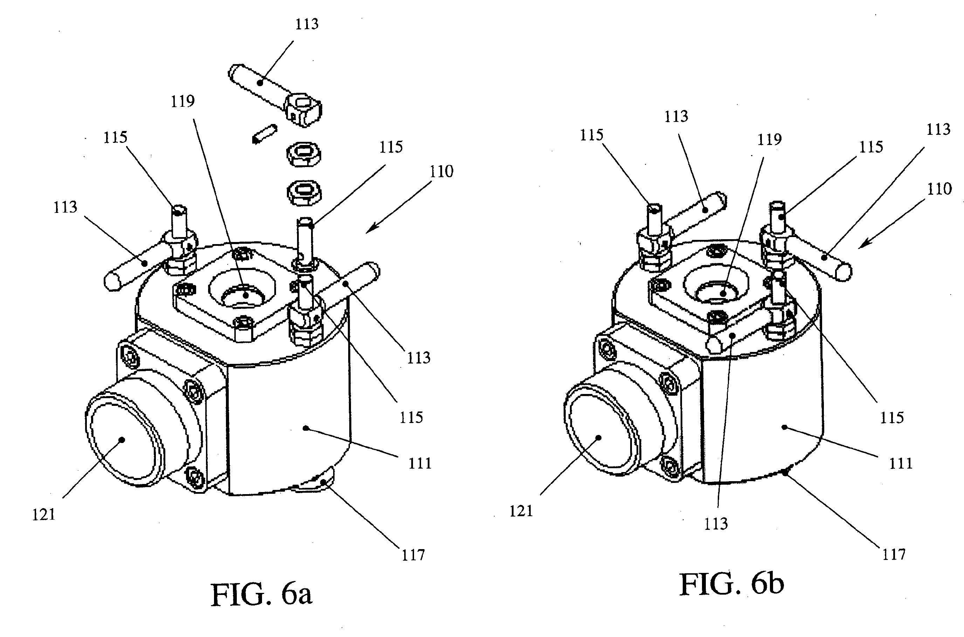

With particular reference to Figures 6a and 6b, it is possible to note that a preferred embodiment of the plugging device-carrying bell 110 is composed of a central body 111, preferably made of Ergal aluminium, equipped with a quick-tightening system to the valve element 50: preferably, the quick-tightening system comprises at least three quick-tightening handles 113 arranged on the perimeter of the upper surface of the central body 111, each one of such quick-tightening handles 113 being integral with an upper end of a rotation pin 115 to rotate such pin 115 around a rotation axis, each one of such rotation pins 115 being integral on its lower part with at least one cam profile 117 rotating around such rotation axis under the rotation action of the respective quick-tightening handle 113, to make each one of such cam profiles 117 pass from an engagement position (Figure 6b) to a disengagement position (Figure 6a) in a connection groove 69 of the valve element 50 and vice versa and, consequently, connect or disconnect and vice versa the plugging device-carrying bell 110 from the valve element 5. The central body 111 further comprises at least one through-hole 119 adapted to allow the passage of the expansion-type plugging device 130 through the bell 110, the valve element 50 and the shaped fitting 30 for plugging the riser 2 and at least one by-pass duct 121 communicating fluid-type with the riser 2 once this latter one is plugged by the expansion-type plugging device 130 inserted inside the plugging device-carrying bell 110. Advantageously, the diameter of the by-pass duct 121 is equal to the riser 2 since, by working with very low pressures (20 millibars), it is absolutely necessary not to have diameter reductions and therefore gas flow-rate reductions: all users connected downstream of the intervention spot through the system 1 according to the present invention must in fact have the same pressure and gas flow-rate to avoid turning off equipment such as hot plates, gas-type bathroom heaters, etc. Moreover, differently therefore from the other components of the system 1 according to the present invention, the plugging device-carrying bell 110 does not use a threaded connection to the valve element 50, but the quick-tightening system that makes the pipelining and assembling operations of the bell 110 extremely safe and quick. Moreover, with the quick-tightening system that exploits the action of the cam profiles 117 at 360° on the connection groove 69 of the valve element 50, it is possible for the operator to choose among three positions the most suitable one for orienting the output direction of the by-pass duct 121.

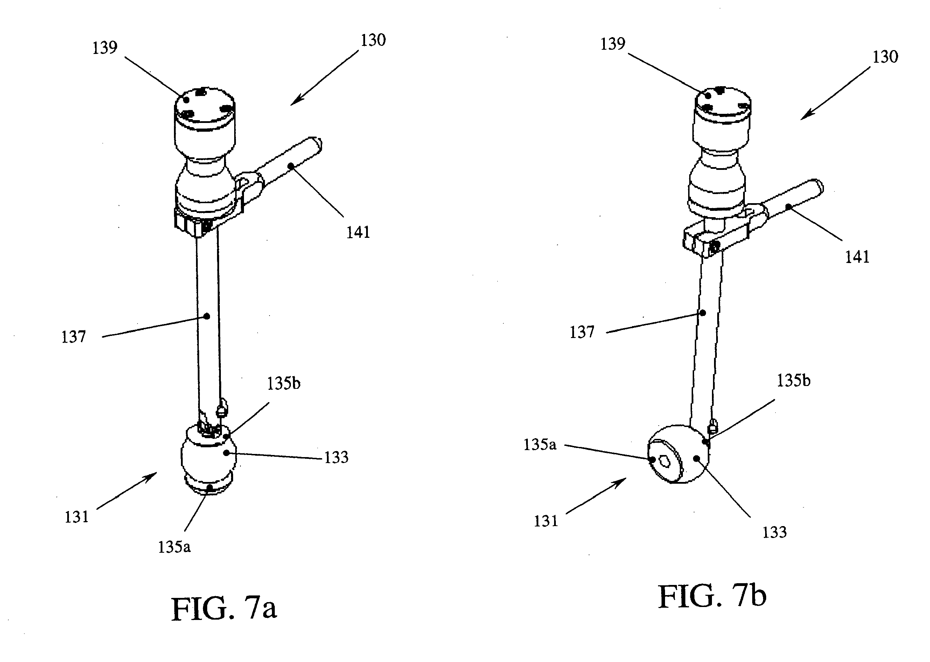

With particular reference to Figures 7a and 7b, it is possible to note that a preferred embodiment of the expansion-type plugging device 130, preferably devised for ducts having a Nominal Diameter ND of 25,4mm (1"), 31,8mm (1"1/4), or 38,1mm (1"1/2), comprises an insertion rod 137 adapted to be inserted through such bell 110, such valve element 50 and such shaped fitting 30 and equipped at a lower end thereof with an expansion-type plugging device 131 composed of a rubber ball 133 interposed between a mobile external flange 135a connected to a kinematic drive and a fixed internal flange 135b through which such kinematic drive slides, such kinematic drive passing inside such insertion rod 137 to be connected to actuating means for such plugging device 131 arranged in an upper end of the insertion rod 137 itself, such actuating means being preferably at least one rotary ring nut 139 that is rotated by the operator: with the rotary movement of the ring-nut 139 along a closing direction, the operator tensions the internal drive connected to the mobile external flange 135a approaching it to the fixed internal flange 135b, and thereby obtaining the compression of the rubber ball 133 (as shown, for example, in Figure 7b) inserted inside the riser 2 through the bell 110, the valve element 50 and the shaped fitting 30 and the airtight seal of the duct. Preferably, the expansion-type plugging device 130 further comprises internal safety means adapted to operate both when expanding (Figure 7b) and when releasing (Figure 7a) the rubber ball 133, in order to avoid any accidental breaking by the operator that can act in a completely safe way and with two working positions only (open/closed). Obviously, the expansion-type plugging device 130 can further be equipped with at least one handle 141 in order to make it easier for the operator to perform the above operations.

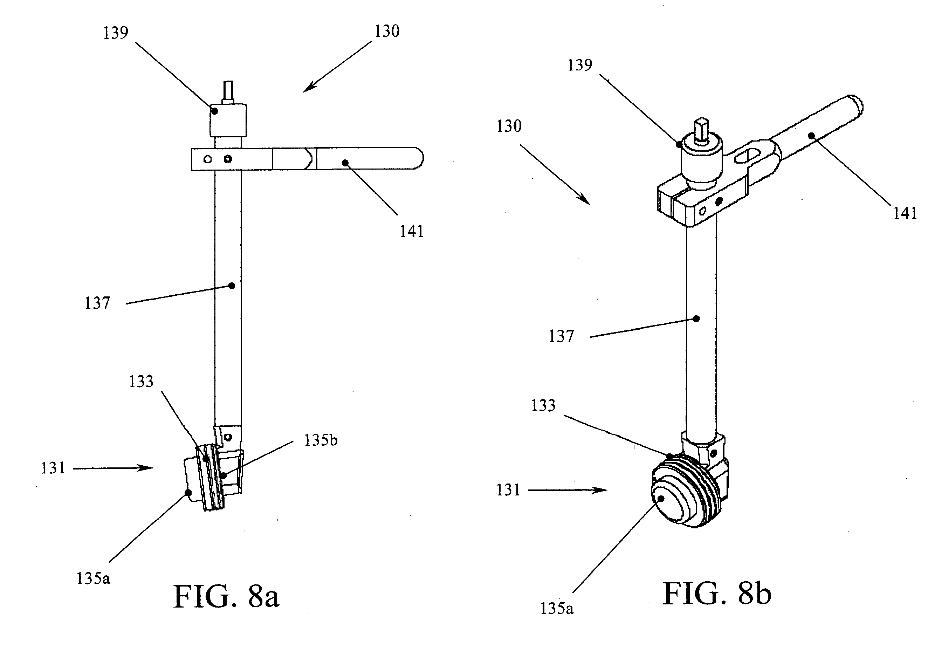

Figures 8a and 8b show an expansion-type plugging device 130, not according to the invention and preferably devised for ducts having a 50,8mm (2"), 63,5mm (2"1/2), or 76,2mm (3")Nominal Diameter ND, the expansion-type plugging device 131 is composed of a gasket 143 with a trapezoidal section interposed between the two flanges 135a, 135b, such flanges being take to compress such gasket 143 through the internal drive made as at least one beveled torque connected to the actuating means 139: thereby, by actuating the actuating means 139 on the top of the actuating rod and by means of the beveled torque, the mobile external flange 135a is approached to the fixed internal flange 135b thereby obtaining the expansion of the gasket 143 and the airtight sealing of the duct.

The system 1 for intercepting and bypassing gases on risers 2 as described above thereby allows making a by-pass with the same diameter of the same low-pressure riser 2 to guarantee the gas delivery continuity to users though allowing an intervention on such riser 2, such as for example in case of execution of works on a certain user deriving from such riser due to dispersions or repairs in general, for the replacement and pipelining of the riser itself, for transferring a user bypass from an old riser to a new riser, etc.

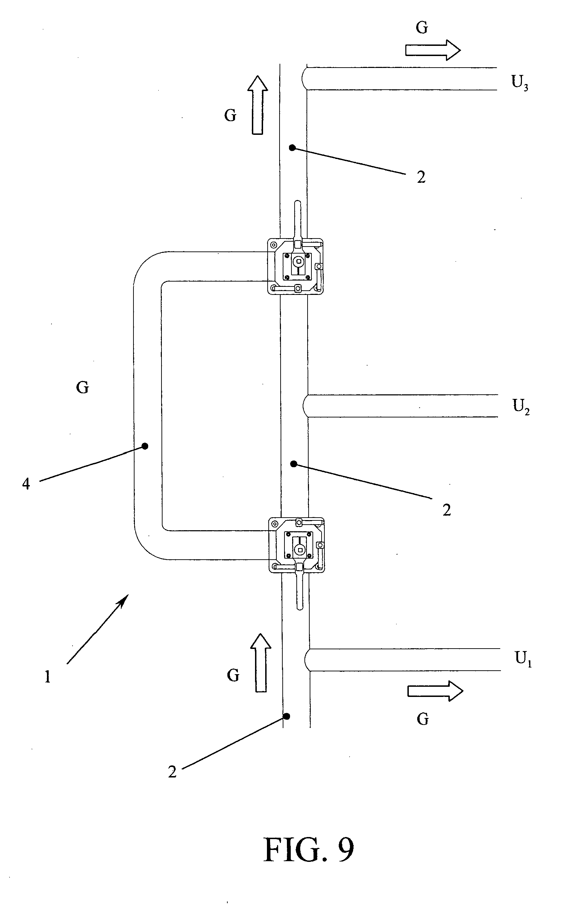

The present invention further refers to a process for intercepting and bypassing gases on risers through a system 1 as previously described. With particular reference t Figure 9, it is possible to schematically know the use of the system 1 according to the present invention for performing works on one of the user by-passes of the riser. In this case, for example, from the riser 2 a first U₁, a second U₂ and a third U₃ user ducts are derived: having to perform, for example, an intervention on the second user duct U₂ that requires the interruption of the gas flow G through the duct U₂ itself, the system 1 according to the present invention allows, through the suitable positioning upstream and downstream of the second user duct U₂ of the components of the system 1 following the steps of the process according to the present invention, making a section of by-pass 4 that guarantees the gas delivery continuity G to the first U₁ and third U₃ user duct though stopping the delivery through the second user duct U₂.

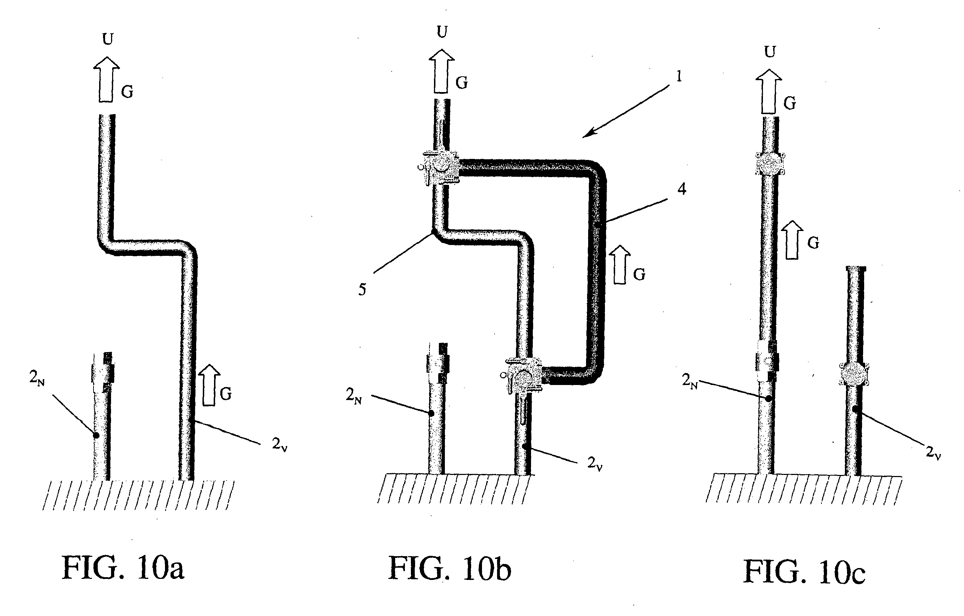

With particular reference to Figures 10a, 10b and 10c, it is possible to schematically note the use of the system 1 according to the present invention for replacing and pipelining a new riser 2_{N}, for example in case the old riser 2ᵥ to be dismantled is made of cast iron and the new riser 2_{N} is connected to a new polyethylene piping in compliance with the standards in force. In this case, through the suitable upstream and downstream positioning of a section 5 to be removed of the old riser 2ᵥ, it is possible to make a section of by-pass 4 (FIG. 10b) that guarantees the gas delivery continuity G to users U though stopping the delivery through such section 5 in such a way as to guarantee the passage of connection from the old riser 2ᵥ (FIG. 10a) to the new riser 2_{N} (FIG. 10c).

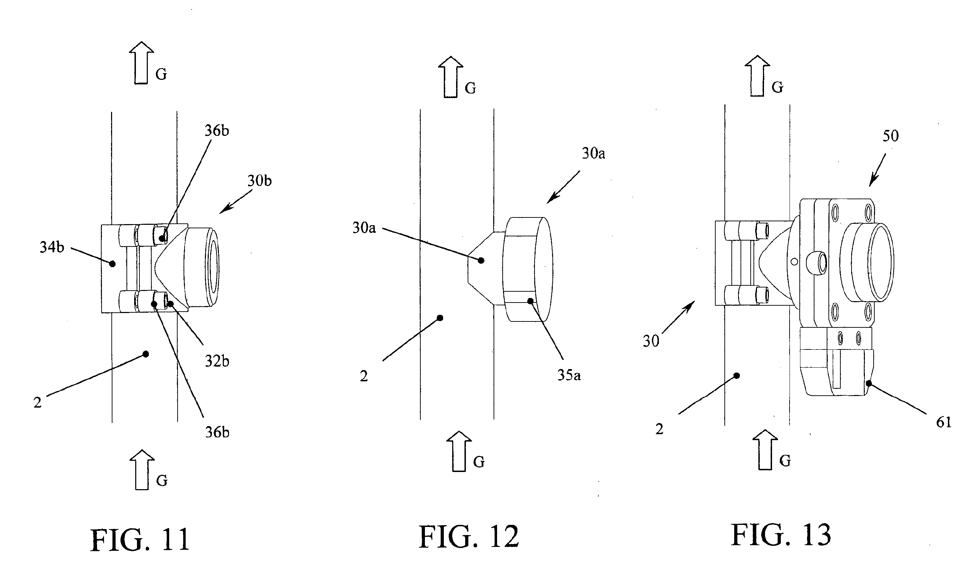

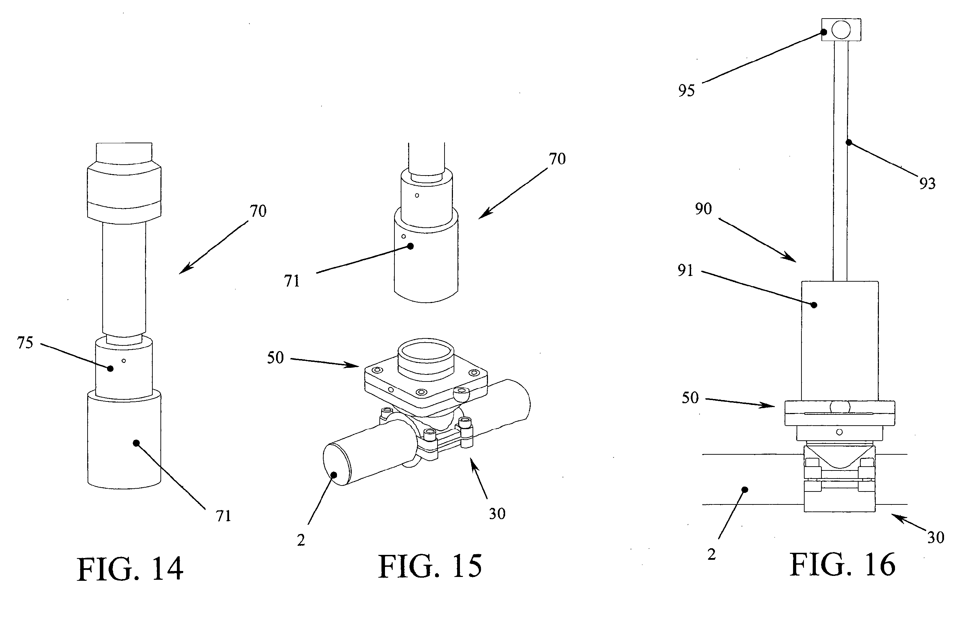

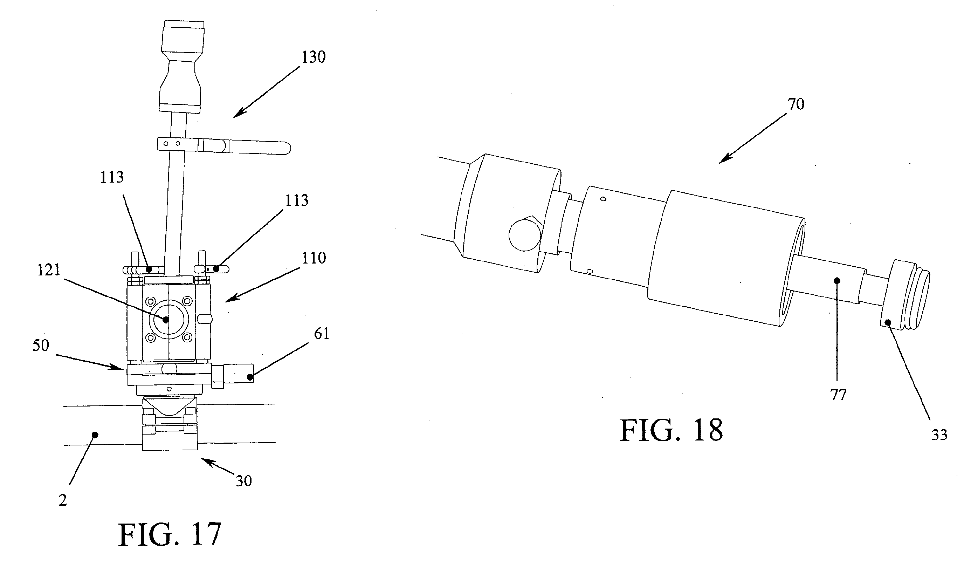

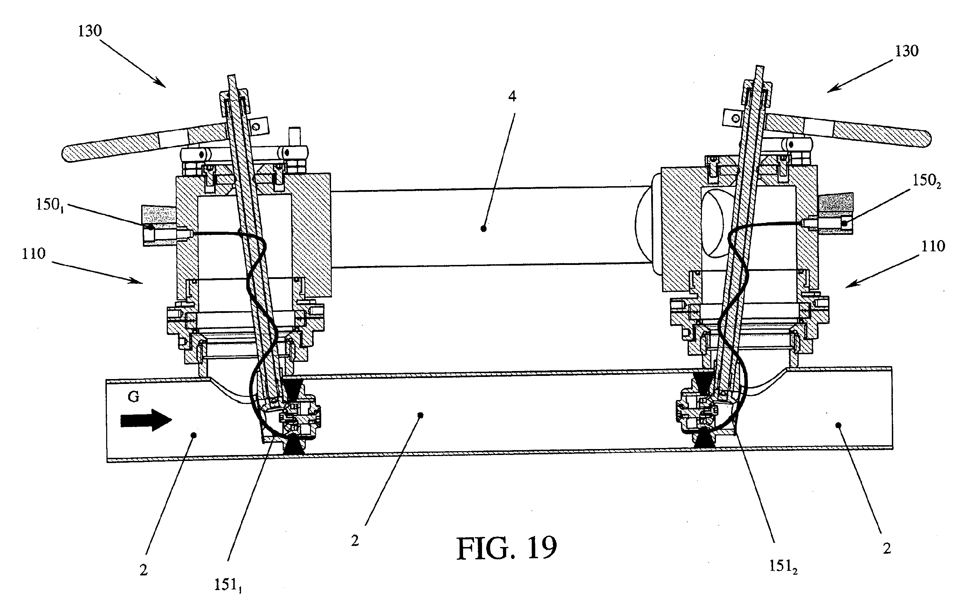

With particular reference to Figures 11 to 18, it is possible to note that the process for intercepting and bypassing gases on risers through a system 1 then comprises the steps of:
a) placing a first shaped fitting 30 in a first position along the riser 2 (Figures 11 and 12). If the shaped fitting 30 is of the welding type (Figure 12), welding such fitting to the riser 2 without internal plug 33 but with the external covering cap 35 suitably screwed onto the second threading 39 of the perimeter neck 37 and waiting for the necessary time for cooling the performed welding beads. If the shaped fitting 30 is of the type with mechanical tightening (Figure 11), fastening the joint 31b along the riser 2 by tightening the upper saddle 32b against the lower saddle 34b through the screws 36b;
b) screwing a first valve element 50 to the second threading 39 of the shaped fitting 30 (FIG. 13) with the closing lamina 59 not inserted in such valve element 50;
c) connecting (Figure 14) the connection fitting 71 to the pipe-drilling machine 70 adequate for the type of used valve element 50;
d) connecting the pipe-drilling machine 70 to such element 50 through the connection fitting 71 and drilling the riser 2;
e) rising the pipe-drilling machine;
f) inserting the closing lamina 59 into the first valve element 50 and removing the pipe-drilling machine 70;: obviously the closing lamina 59 can be inserted in the slit 63 that is in the easier position for the operator to act on the handle 61;
g) connecting (Figure 16) the bell 90 with visor to the first valve element 50, then removing the closing lamina 59 and removing the chips deriving from drilling by using the magnet and/or the brush connected to the cleaning rod 93 operating through the driving handle 95;
h) inserting the closing lamina 59 into the first valve element 50;
i) removing the bell 90 with visor from the first valve element 50;
j) proceeding to the second position by repeating steps a), b), d), e), f), g) and h);
k) connecting the two plugging device-carrying bells 110 to the valve elements 50, through a quick-tightening system, orienting the by-pass outputs in the most favorable way according to one of the three possible positions;
l) connecting the by-pass duct 121 of the first plugging device-carrying bell 110 to the by-pass duct of the second plugging device-carrying bell 110 through a section of by-pass 4;
m) removing the closing lamina 59 of the two valve elements 50 in order to guarantee the gas flow in the section of by-pass 4 and actuating (Figure 17) the two expansion-type plugging devices 130 inserted inside the plugging device-carrying belts 110 by acting on the actuation means for expanding the plugging elements 131 inside the riser 2 till the complete plugging of the riser 2 itself (Figure 19);
n) cleaning (Figure 19) the section of duct 2 on which the intervention must be performed by inserting air (or nitrogen) from a first valve 150₁ of the first plugging device-carrying bell 110 through a first duct 151₁. The section 2 will be cleaned when, from a second valve 150₂ of the second plugging device-carrying bell 110 only air (or nitrogen) will go out through a second duct 151₂: it is now possible to perform the necessary works along the section of riser 2 included between such first position and such second position without gas but without having interrupted its delivery to users;
o) performing the recharge of the section 2 of the duct on which one has intervened by removing the plugging device and leaving open the valve 150₂. The section will be recharged when, from the valve 150₂ through the duct 151₂, only gas will go out.

After having ended the above works, removing the plugging devices, by re-positioning them inside the plugging device-carrying bells; in particular:
p) inserting the closing laminas 59 into the respective first and second valve element 50;
q) removing the section of by-pass 4;
r) removing the first and second plugging device-carrying bell 110, and the related first and second expansion-type plugging device 130 from the respective first and second valve element 50;
s) replacing the cutter-carrying spindle 73 of the pipe-drilling machine 70 with the plug-carrying shaft 77;
t) inserting (Figure 18) with pressure an internal plug 33 on a connection end of such plug-carrying shaft 77;
u) connecting the pipe-drilling machine 70 to such first or second valve element 50;
v) removing the closing lamina 59 from the first or second valve element 50;
w) screwing the internal plug 33 onto the first threading of the related first or second shaped fitting 30;
x) removing the pipe-drilling machine 70 and such first or second valve element 50 from such first or second shaped fitting 30;
y) screwing the related external covering cap 35 onto the second threading 39 of the perimeter neck 37 of such first or second shaped fitting 30;
z) repeating steps t) to o) for the remaining second or first valve element 50 and second or first shaped fitting 30.

## Claims

1. System (1) for intercepting and bypassing gases on a pressurised riser (2), said system (1) being composed of:
- at least one shaped fitting (30) to be fastened to said riser (2);
- at least one valve element (50) adapted to cooperate with said shaped fitting (30);
- at least one pipe-drilling machine (70) adapted to drill said riser (2) through said valve element (50) and said shaped fitting (30) and to insert an internal plug into said shaped fitting (30);
- at least one bell (90) with visor adapted to cooperate with said valve element (50);
- at least one plugging device-carrying bell (110) adapted to cooperate with said valve element (50);
- at least one expansion-type plugging device (130) adapted to cooperate with said bell (110) and to plug said riser (2) through said bell (110), said valve element (50) and said shaped fitting (30);
- wherein said plugging device-carrying bell (110) is composed of a central body (111), said central body (111) comprising at least one through-hole (119) adapted to allow a passage of said expansion-type plugging device (130) through said bell (110), said valve element (50) and said shaped fitting (30) in order to plug said expansion-type plugging device (130) inserted inside said plugging device-carrying bell (110), said central body (111) being equipped with a quick-tightening system to said valve element (50), and at least one by-pass duct (121) communicating fluid-type with said riser (2) once said riser (2) is plugged by said expansion-type plugging device (130) inserted inside said plugging-device carrying bell (110),
- wherein said valve element (50) is a flat valve composed of a lower valve body (51) and an upper valve body (53) joined through mechanical means and by interposing at least two flat gaskets (57) joined on two internal sides, at least one closing lamina (59) being adapted to be inserted between said lower body (51) and said upper body (53);
wherein
said expansion-type plugging device (130) comprises an insertion rod (137) adapted to be inserted through said bell (110), said valve element (50) and said shaped fitting (30) and equipped in a lower end thereof with an expansion-type plugging device (131) connected to a kinematic drive, said kinematic drive passing inside said insertion rod (137) to be connected to actuating means of said plugging device (131) arranged in an upper end of said insertion rod (137), said expansion-type plugging device (131) being composed of a rubber ball (133) interposed between a mobile external flange (135a) connected to said kinematic drive and a fixed internal flange (135b) through which said kinematic drive slides, said actuating means being at least one rotary ring nut (139).

2. System (1) according to claim 1, **characterised in that** said shaped fitting (30) is composed of a shaped body (31a) to be welded onto said riser (2), at least one internal plug (33) and at least one external covering cap (35), said shaped body (31a) being equipped with a perimeter neck (37) equipped with a first internal threading and a second external threading (39), said first threading being adapted to allow a connection of said internal plug (33) and said second threading (39) being adapted to allow a connection of said valve element (50) or of said external covering cap (35).

3. System (1) according to claim 1, **characterised in that** said shaped fitting (30) is composed of a joint (31b) made of a mechanical joining of an upper saddle (32b) and a lower saddle (34b) around said riser (2) through mechanical means, of at least one internal plug (33) and of at least one external covering cap (35), said upper saddle (32b) being equipped with a perimeter neck (37) equipped with a first internal threading and a second external threading (39), said first threading being adapted to allow a connection of said internal plug (33) and said second threading (39) being adapted to allow a connection of said valve element (50) or of said external covering cap (35).

4. System (1) according to claim 3, **characterised in that** at least one flat rubber gasket (38b) is interposed between said upper saddle (32b) and said lower saddle (38b).

5. System (1) according to claim 1, **characterised in that** said closing lamina (59) can be inserted through one of a plurality of slits (63), each one of said slits (63) being arranged along a different side of said valve element (50) and interposed between said lower body (51) and said upper body (53).

6. System (1) according to claim 1, **characterised in that** said pipe-drilling machine (70) comprises a plurality of interchangeable connection fittings (71), each one of said fittings (71) being adapted to allow a connection of said pipe-drilling machine (70) to a related and corresponding different one of said valve elements (50).

7. System (1) according to claim 1, **characterised in that** said pipe-drilling machine (70) comprises at least one rotary shaft, at least one cutter-carrying spindle (73) connected to said shaft and related cutters (75), and at least one plug-carrying shaft that can replace said cutter-carrying spindle (73) for inserting and finally screwing said internal plug (33) inside said shaped fitting (30).

8. System (1) according to claim 1, **characterised in that** said bell (90) with visor is composed of a central body (91) wholly made of a transparent material, and at least one cleaning rod (93) of said shaped fitting (30), said central body (91) being equipped with at least one through-hole through which it is possible to insert said cleaning rod (93) inside said fitting (30).

9. System (1) according to claim 1, **characterised in that** said cleaning rod (93) comprises a lower end downstream of said central body (91) equipped with connecting means (97) to at least one brush (99) or at least one magnet (101) and an upper end upstream of said central body (91) equipped with at least one driving handle (95).

10. System (1) according to claim 1, **characterised in that** a diameter of said by-pass duct (121) is equal to a diameter of said riser (2).

11. System (1) according to claim 1, **characterised in that** said expansion-type plugging device (130) comprises internal safety means adapted to act both when expanding and when releasing said rubber ball (133) .

12. Process for intercepting and bypassing gases on risers (2) using a system (1) according to claim 7, a system according to claim 8, a system according to claim 9 and a system according to claim 10, comprising the steps of:
a) placing a first shaped fitting (30) in a first position along said riser (2);
b) screwing said first valve element (50) onto said second threading (39) of said shaped fitting (30) with said non-inserted closing lamina (59) of said valve element (50);
c) connecting said connection fitting (71) to said pipe-drilling machine (70);
d) connecting said pipe-drilling machine (70) to said element (50) through said connection fitting (71) and drilling said riser (2) ;
e) inserting said closing lamina (59) into said first valve element (50) and removing said pipe-drilling machine (70);
f) connecting said bell (90) with visor to said first valve element (50) and removing said closing lamina (59) and removing the chips deriving from said drilling by using said magnet and/or said brush connected to said cleaning rod (93) acting through said driving handle (95) and then rising it;
g) inserting said closing lamina (59) into said first valve element (50);
h) removing said bell (90) with visor from said first valve element (50);
i) repeating steps a), b), d), e), f), g) and h) per a second one of said shaped fittings (30) and for a second one of said valve elements (50);
j) connecting a first plugging device-carrying bell (110) to said first valve element (50) and connecting a second plugging device-carrying bell (110) to said second valve element (50);
k) connecting said by-pass duct (121) of said first plugging device-carrying bell (110) to said by-pass duct of said second plugging device-carrying bell (110) through a section of by-pass (4), between said first position and said second position along said riser (2) a gas flow being interrupted;
l) removing said closing lamina (59) from said first valve element (50) and actuating a first expansion-type plugging device (130) inserted inside said plugging device-carrying bell (110) till the complete plugging of said riser (2) and removing said closing lamina (59) from said second valve element (50) and actuating a second expansion-type plugging device (130) inserted inside said plugging device-carrying bell (110) till the complete plugging of said riser (2);
m) cleaning said section of duct (2) on which an intervention must be made by inserting air or nitrogen from a first valve (150₁) of said first plugging device-carrying bell through a first duct (151₁): said section di duct will be cleaned when from a second valve (150₂) of said second plugging device-carrying bell only air or nitrogen will go out;
n) performing the intervention on said section of duct (2);
o) recharging said section of duct (2) on which an intervention has been made by releasing said first plugging device and leaving open said second valve (150₂) of said second bell (110);
p) inserting said closing lamina (59) into said respective first and second valve element (50);
q) removing said section of by-pass (4);
r) removing said first and second plugging device-carrying bell (110), and the related said first and second expansion-type plugging device (130) from said respective first and second valve element (50);
s) replacing said cutter-carrying spindle (73) of said pipe-drilling machine (70) with a plug-carrying shaft (77);
t) inserting with pressure said internal plug (33) on a connection end of said plug-carrying shaft (77);
u) connecting said pipe-drilling machine (70) to said first or second valve element (50) ;
v) removing said closing lamina (59) from said first or second valve element (50);
w) screwing said internal plug (33) onto said first threading of said related first or second shaped fitting (30);
x) removing said pipe-drilling machine (70) and said first or second valve element (50) from said first or second shaped fitting (30);
y) screwing said related external covering cap (35) onto said second threading (39) of said perimeter neck (37) of said first or second shaped fitting (30);
z) repeating steps t) to o) for the remaining second or first valve element (50) and second or first shaped fitting (30).

## Patentansprüche

1. Gassperr- und -ableitungssystem (1) an einer unter Druck stehenden Steigleitung (2), das genannte System (1) besteht aus:
- mindestens einem Formanschluss (30), der an der genannten Steigleitung (2) befestigt wird;
- mindestens einem Ventilelement (50), das dazu dient, mit dem genannten Formanschluss (30) zusammenzuarbeiten;
- mindestens einer Rohrlochmaschine (70), die dazu dient, die genannte Steigleitung (2) durch das genannte Ventilelement (50) und den genannten Formanschluss (30) zu durchlochen, und einen internen Stopfen in den genannten Formanschluss (30) einzuführen;
- mindestens einer Glocke (90) mit Monitor, die dazu dient, mit dem genannten Ventilelement (50) zusammenzuarbeiten;
- mindestens einer Verschlussglocke (110), die dazu dient, mit dem genannten Ventilelement (50) zusammenzuarbeiten;
- mindestens einem Expansionsverschluss (130), der dazu dient, mit der genannten Glocke (110) zusammenzuarbeiten und die genannte Steigleitung (2) durch die genannte Glocke (110), das genannte Ventilelement (50) und den genannten Formanschluss (30) zu verschließen;
- in dem die genannte Verschlussglocke (110) aus einem Zentralkörper (111) besteht, der genannte Zentralkörper (111) schließt mindestens eine durchgehende Bohrung (119) ein, die dazu dient, einen Durchgang des genannten Expansionsverschlusses (130) durch die genannte Glocke (110), das genannte Ventilelement (50) und den genannten Formanschluss (30) zu ermöglichen, um den genannten Expansionsverschluss (130) zu verschließen, der in der genannten Verschlussglocke (110) eingesetzt ist, der genannte Zentralkörper (111) ist mit einem Schnellanzugssystem am genannten Ventilelement (50) und mit mindestens einer Bypass-Leitung (121) ausgestattet ist, die fluidisch mit der genannten Steigleitung (2) in Kommunikation tritt, nachdem die genannte Steigleitung (2) vom genannten Expansionsverschluss (130) verschlossen wird, der in der genannten Verschlussglocke (110) eingesetzt ist;
- in dem das genannte Ventilelement (50) ein Flachventil ist, das aus einem unteren Ventilkörper (51) und einem oberen Ventilkörper (53) besteht, die durch mechanische Vorrichtungen und Dazwischenlegen von mindestens zwei Flachdichtungen (57), die an zwei Innenseiten zusammenpassen, zwischen dem genannten unteren Körper (51) und dem genannten oberen Körper (53) vereint sind, wobei mindestens eine Abschlussplatte (59) eingesetzt werden kann;
- in dem der genannte Expansionsverschluss (130) eine Einrückstange (137) einschließt, die dazu dient, durch die genannte Glocke (110), das genannte Ventilelement (50) und den genannten Formanschluss (30) eingerückt zu werden, und die an ihrem unteren Endstück mit einem Expansionsverschlusselement (131) ausgestattet ist, das mit einer kinematischen Steuerung verbunden ist, die genannte kinematische Steuerung durchläuft das Innere der genannten Einrückstange (137), um mit einer Aktivierungsvorrichtung des genannten Verschlusselements (131) verbunden zu werden, das in einem oberen Endstück der genannten Einrückstange (137) angeordnet ist, das genannte Expansionsverschlusselement (131) besteht aus einer Gummikugel (133), die zwischen einem beweglichen externen Flansch (135a), welcher mit der genannten kinematischen Steuerung verbunden ist, und einem festen internen Flansch (135b), durch den die genannte kinematische Steuerung durchläuft, liegt, die genannte Aktivierungsvorrichtung ist mindestens eine sich drehende Nutmutter (139).

2. System (1) gemäß Patentanspruch 1, das **dadurch gekennzeichnet ist, dass** der genannte Formanschluss (30) aus einem Formkörper (31 a), der an der genannten Steigleitung (2) angeschweißt werden muss, mindestens einem internen Verschluss (33) und mindestens einer externen Abdeckkappe (35) besteht, der genannte Formkörper (31 a) ist mit einem Umfangsbund (37) ausgestattet, der mit einem ersten Innengewinde und einem zweiten Außengewinde (39) ausgestattet ist, das genannte erste Gewinde dient dazu, eine Verbindung des genannten internen Verschlusses (33) mit dem genannten zweiten Gewinde (39) zu ermöglichen, das dazu dient, eine Verbindung des genannten Ventilelements (50) oder der genannten externen Abdeckkappe (35) zu ermöglichen.

3. System (1) gemäß Patentanspruch 1, das **dadurch gekennzeichnet ist, dass** der genannte Formanschluss (30) aus einer Verbindung (31b), die aus einer mechanischen Vereinigung eines oberen Sattels (32b) und eines unteren Sattels (34b) an der genannten Steigleitung (2) durch mechanische Vorrichtungen, mindestens einem internen Verschluss (33) und mindestens einer externen Abdeckkappe (35) besteht, der genannte obere Sattel (32b) ist mit einem Umfangsbund (37) ausgestattet, der mit einem ersten Innengewinde und einem zweiten Außengewinde (39) ausgestattet ist, das genannte erste Gewinde dient dazu, eine Verbindung des genannten internen Verschlusses (33) mit dem genannten zweiten Gewinde (39) zu ermöglichen, das dazu dient, eine Verbindung des genannten Ventilelements (50) oder der genannten externen Abdeckkappe (35) zu ermöglichen.

4. System (1) gemäß Patentanspruch 3, das **dadurch gekennzeichnet ist, dass** mindestens eine Flachgummidichtung (38b) zwischen den genannten oberen Sattel (32b) und den genannten unteren Sattel (34b) gelegt wurde.

5. System (1) gemäß Patentanspruch 1, das **dadurch gekennzeichnet ist, dass** die genannte Abschlussplatte (59) durch einen oder mehrere Schlitze (63) eingesetzt werden kann, jeder dieser Schlitze (63) ist längs einer anderen Seite des genannten Ventilelements (50) und zwischen dem genannten unteren Körper (51) und dem genannten oberen Körper (53) angeordnet.

6. System (1) gemäß Patentanspruch 1, das **dadurch gekennzeichnet ist, dass** die genannte Rohrlochmaschine (70) mehrere austauschbare Verbindungsanschlüsse (71) enthält, jeder dieser Anschlüsse (71) dient dazu, eine Verbindung der genannten Rohrlochmaschine (70) mit einem jeweiligen und entsprechenden anderen der genannten Ventilelemente (50) zu ermöglichen.

7. System (1) gemäß Patentanspruch 1, das **dadurch gekennzeichnet ist, dass** die genannte Rohrlochmaschine (70) mindestens eine Drehwelle, mindestens eine Fräserspindel (73), die mit der genannten Welle und den entsprechenden Fräsern (75) verbunden ist, und mindestens eine Verschlusswelle, die mit der genannten Fräserspindel (73) ausgetauscht werden kann, für die Einführung und abschließende Verschraubung des genannten internen Verschlusses (33) in den genannten Formanschluss (30) enthält.

8. System (1) gemäß Patentanspruch 1, das **dadurch gekennzeichnet ist, dass** die genannte Glocke (90) mit Monitor aus einem Zentralkörper (91), der ganz aus transparentem Material realisiert wurde, und aus mindestens einer Reinigungsstange (93) des genannten Formanschlusses (30) besteht, der genannte Zentralkörper (91) ist mit mindestens einer durchgehenden Bohrung ausgestattet, durch die die genannte Reinigungsstange (93) in den genannten Anschluss (30) eingeführt werden kann.

9. System (1) gemäß Patentanspruch 1, das **dadurch gekennzeichnet ist, dass** die genannte Reinigungsstange (93) ein unteres Endstück unter dem genannten Zentralkörper (91) einschließt, das mit Verbindungsvorrichtungen (97) und mindestens einer Bürste (99) oder mindestens einem Magneten (101) und einem oberen Endstück über dem genannten Zentralkörper (91) ausgestattet ist, das mit mindestens einem Manövergriff (95) ausgestattet ist.

10. System (1) gemäß Patentanspruch 1, das **dadurch gekennzeichnet ist, dass** ein Durchmesser der genannten Bypass-Leitung (121) dem Durchmesser der Steigleitung (2) entspricht.

11. System (1) gemäß Patentanspruch 1, das **dadurch gekennzeichnet ist, dass** der genannte Expansionsverschluss (130) interne Sicherheitsvorrichtungen enthält, die dazu dienen, sowohl in der Expansions- als auch in der Lösungsphase der genannten Gummikugel (133) zu wirken.

12. Gassperr- und -ableitungsverfahren an Steigleitungen (2) mit Verwendung eines Systems (1) gemäß Patentanspruch 7, eines Systems gemäß Patentanspruch 8, eines Systems gemäß Patentanspruch 9 und eines Systems gemäß Patentanspruch 10, das **dadurch gekennzeichnet** ist, folgende Phasen einzuschließen:
a) Einen ersten genannten Formanschluss (30) in einer ersten Position längs der genannten Steigleitung (2) positionieren;
b) Das genannte erste Ventilelement (50) mit dem genannten zweiten Gewinde (39) des genannten Formanschlusses (30) mit einer nicht eingeführten Abschlussplatte (59) des genannten Ventilelements (50) verschrauben;
c) Den genannten Verbindungsanschluss (71) mit der genannten Rohrlochmaschine (70) verbinden;
d) Die genannte Rohrlochmaschine (70) mit dem genannten Element (50) durch den genannten Verbindungsanschluss (71) verbinden, und eine Lochung der genannten Steigleitung (2) ausführen;
e) Die genannte Abschlussplatte (59) in das genannte erste Ventilelement (50) einführen, und die genannte Rohrlochmaschine (70) entfernen;
f) Die genannte Glocke (90) mit Monitor mit dem genannten ersten Ventilelement (50) verbinden, und die genannte Abschlussplatte (59) entfernen, und die Späne entfernen, die durch die genannte Lochung entstehen, dazu den genannten Magneten und/oder die genannte Bürste verwenden, die mit der genannten Reinigungsstange (93) verbunden ist, dabei durch den genannten Manövergriff (95) einwirken, und sie dann wieder nach oben führen;
g) Die genannte Abschlussplatte (59) in das genannte erste Ventilelement (50) einführen;
h) Die genannte Glocke (90) mit Monitor vom genannten ersten Ventilelement (50) entfernen;
i) Die Phasen a), b), d), e), f), g) und h) für einen genannten zweiten Formanschluss (30) und für ein genanntes zweites Ventilelement (50) wiederholen;
j) Eine erste Verschlussglocke (110) mit dem genannten ersten Ventilelement (50) verbinden, und eine zweite Verschlussglocke (110) mit dem genannten zweiten Ventilelement (50) verbinden;
k) Die genannte Bypass-Leitung (121) der genannten ersten Verschlussglocke (110) mit der genannten Bypass-Leitung der genannten zweiten Verschlussglocke (110) durch einen Bypass-Abschnitt (4) zwischen der genannten ersten Position und der genannten zweiten Position längs der genannten Steigleitung (2) verbinden, da ein Gasfluss unterbrochen ist;
l) Die genannte Abschlussplatte (59) vom genannten ersten Ventilelement (50) entfernen, und einen ersten Expansionsverschluss (130), der in der genannten Verschlussglocke (110) eingesetzt ist, bis zur vollständigen Verstopfung der genannten Leitung (2) aktivieren, und die genannte Abschlussplatte (59) vom genannten zweiten Ventilelement (50) entfernen, und einen zweiten Expansionsverschluss (130), der in der genannten Verschlussglocke (110) eingesetzt ist, bis zur vollständigen Verstopfung der genannten Leitung (2) aktivieren;
m) Den genannten Leitungsabschnitt (2), an dem der Einschritt erfolgen soll, indem Luft oder Stickstoff aus einem ersten Ventil (150₁) der genannten ersten Verschlussglocke durch eine erste Leitung (151₁) eingeführt werden soll, vergüten: Der genannte Leitungsabschnitt wird vergütet, wenn aus einem zweiten Ventil (150₂) der genannten zweiten Verschlussglocke nur die genannte Luft oder Stickstoff austritt;
n) Den Einschritt am genannten Leitungsabschnitt (2) ausführen;
o) Den genannten Leitungsabschnitt (2), an dem der Einschritt erfolgt ist, wieder befüllen, den genannten ersten Verschluss lösen, und das genannte zweite Ventil (150₂) der genannten zweiten Glocke (110) offen lassen;
p) Die genannte Abschlussplatte (59) in das genannte jeweilige erste und zweite Ventilelement (50) einführen;
q) Den genannten Bypass-Abschnitt (4) entfernen;
r) Die genannte erste und zweite Verschlussglocke (110), und die entsprechenden ersten und zweiten Expansionsverschlüsse (130) vom jeweiligen genannten ersten und zweiten Ventilelement (50) entfernen;
s) Die genannte Fräserspindel (73) der genannten Rohrlochmaschine (70) durch die genannte Verschlusswelle (77) ersetzen;
t) Den genannten internen Verschluss (33) mit Druck an einem Endstück der Verbindung der genannten Verschlusswelle (77) einführen;
u) Die genannte Rohrlochmaschine (70) mit dem genannten ersten oder zweiten Ventilelement (50) verbinden;
v) Die genannte Abschlussplatte (59) vom genannten ersten oder zweiten Ventilelement (50) entfernen;
w) Den genannten internen Verschluss (33) auf dem genannten ersten Gewinde des genannten jeweiligen ersten oder zweiten Formanschlusses (30) verschrauben;
x) Die genannte Rohrlochmaschine (70) und das genannte erste oder zweite Ventilelement (50) vom genannten ersten oder zweiten Formanschluss (30) entfernen;
y) Eine entsprechende externe Abdeckklappe (35) auf das genannte zweite Gewinde (39) des genannten Umfangsbundes (37) des genannten ersten oder zweiten Formanschlusses (30) schrauben;
z) Die Phasen von t) bis o) für das verbleibende zweite oder erste Ventilelement (50) und den zweiten oder ersten Formanschluss (30) wiederholen.

## Revendications

1. Système (1) d'interception et de dérivation de gaz sur une colonne montante (2) en pression, ce système (1) étant composé de :
- au moins un raccord profilé (30) à fixer à la colonne montante (2) ;
- au moins un élément à vanne (50) en mesure de coopérer avec le raccord profilé (30) ;
- au moins une machine perceuse (70) en mesure de percer la colonne montante (2) à travers l'élément à vanne (50) et le raccord profilé (30) et à même d'introduire un bouchon interne dans le raccord profilé (30) ;
- au moins une cloche (90) avec viseur en mesure de coopérer avec l'élément à vanne (50) ;
- au moins une cloche porte-obturateur (110) en mesure de coopérer avec l'élément à vanne (50) ;
- au moins un obturateur à expansion (130) en mesure de coopérer avec la cloche (110) et de boucher la colonne montante (2) à travers la cloche (110), l'élément à vanne (50) et le raccord profilé (30) ;
- où la cloche porte-obturateur (110) est composée d'un corps central (111), comprenant au moins un trou passant (119) permettant le passage de l'obturateur à expansion (130) à travers la cloche (110), l'élément à vanne (50) et le raccord profilé (30) afin que l'obturateur à expansion (130), inséré à l'intérieur de la cloche porte-obturateur (110), accomplisse sa fonction ; dont le susdit corps central (111) est doté d'un système de serrage rapide à l'élément à vanne (50), et au moins d'un conduit de by-pass (121) communiquant de manière fluidique avec la colonne montante (2) quand cette dernière est bouchée par l'obturateur à expansion (130) qui se trouve à l'intérieur de la cloche porte-obturateur (110) ;
- où l'élément à vanne (50) est constitué d'une vanne plate composée d'un corps de vanne inférieur (51) et d'un corps de vanne supérieur (53) reliés par des moyens mécaniques et par l'interposition d'au moins deux joints plats (57) alignés sur les deux côtés internes, entre le corps inférieur (51) et le corps supérieur (53) où s'insère au moins une lame de fermeture (59) ;
- où l'obturateur à expansion (130) comprend une tige d'insertion (137) pouvant passer à l'intérieur de la cloche (110), de l'élément à vanne (50) et du raccord profilé (30), qui est dotée à son extrémité inférieure d'un élément obturateur à expansion (131) relié à une commande cinématique qui passe à l'intérieur de la tige d'insertion (137) pour rejoindre le moyen d'actionnement de l'élément obturateur (131) situé à l'extrémité supérieure de la tige d'insertion (137) ; l'élément obturateur à expansion (131) est composé d'une bille en caoutchouc (133) interposée entre la bride interne mobile (135a) reliée à la commande cinématique et la bride interne fixe (135b) à travers laquelle glisse la commande cinématique, ce moyen d'actionnement est composé au moins d'une bague tournante (139).

2. Système (1) selon la revendication 1, où le raccord profilé (30) est composé d'un corps profilé (31a) à souder à la colonne montante (2), au moins d'un bouchon interne (33) et d'une calotte externe de couverture (35), dont le corps profilé (31a) est doté d'un collier extérieur (37) avec un premier filetage interne et un second filetage externe (39), où le premier filetage permet le raccord au bouchon interne (33) et le second filetage (39) permet le raccord à l'élément à vanne (50) ou à la calotte externe de couverture (35).

3. Système (1) selon la revendication 1, où le raccord profilé (30) est composé d'un joint (31b) formé de l'union mécanique d'une selle supérieure (32b) et d'une selle inférieure (34b) autour de la colonne montante (2) à l'aide de moyens mécaniques, au moins d'un tapis interne (33) et d'une calotte externe de couverture (35) ; dont la selle supérieure (32b) est dotée d'un collier extérieur (37) avec un premier filetage interne et un second filetage externe (39), où le premier filetage permet le raccord au bouchon interne (33) et le second filetage (39) permet le raccord à l'élément à vanne (50) ou à la calotte externe de couverture (35).

4. Système (1) selon la revendication 3, où un joint plat en caoutchouc (38b) au moins est interposé entre la selle supérieure (32b) et la selle inférieure (34b).

5. Système (1) selon la revendication 1, où la lame de fermeture (59) peut être insérée dans une pluralité d'orifices (63) étant chacun placé le long d'un côté différent de l'élément à vanne (50) et étant chacun interposé entre le corps inférieur (51) et le corps supérieur (53).

6. Système (1) selon la revendication 1, où la machine perceuse (70) comprend une pluralité de raccords de connexion (71) interchangeables dont chacun permet le raccord à la machine perceuse (70) à travers différents éléments à vanne (50).

7. Système (1) selon la revendication 1, où la machine perceuse (70) comprend au moins un arbre tournant, une broche porte-fraises (73) reliée à l'arbre et les fraises (75) relatives, et au moins un arbre porte-bouchons pouvant remplacer la broche porte-fraises (73) pour l'introduction et le serrage final du bouchon interne (33) dans le raccord profilé (30).

8. Système (1) selon la revendication 1, où la cloche (90) avec viseur est composée d'un corps central (91) réalisé entièrement en matière transparente et au moins d'une tige de nettoyage (93) du raccord profilé (30) ; dont le corps central (91) est doté au moins d'un trou passant permettant d'introduire la tige de nettoyage (93) à l'intérieur du raccord (30).

9. Système (1) selon la revendication 1, où la tige de nettoyage (93) comprend une extrémité inférieure en aval du corps central (91) dotée de moyens de raccord (97) et au moins d'un balais (99) ou d'un aimant (101) ainsi qu'une extrémité supérieure située en amont du corps central (91) dotée au moins d'une poignée de manoeuvre (95).

10. Système (1) selon la revendication 1, où un diamètre du conduit de by-pass (121) est égal au diamètre de la colonne montante (2).

11. Système (1) selon la revendication 1, où l'obturateur à expansion (130) comprend des moyens internes de sécurité en mesure d'agir aussi bien en phase d'expansion que de retrait de la bille en caoutchouc (133).

12. Procédure d'interception et de dérivation de gaz sur des colonnes montantes (2) à l'aide d'un système (1) selon la revendication 7, un système selon la revendication 8, un système selon la revendication 9 et un système selon la revendication 10, comprenant les opérations suivantes :
a) positionner un premier raccord profilé (30) le long de la colonne montante (2) ;
b) visser le premier élément à vanne (50) dans le second filetage (39) du raccord profilé (30) sans insérer la lame de fermeture (59) de cet élément à vanne (50) ;
c) brancher ce raccord (71) à la machine perceuse (70) ;
d) relier la machine perceuse (70) à cet élément (50) à travers le raccord de connexion (71) et percer la colonne montante (2) ;
e) insérer la lame de fermeture (59) dans le premier élément à vanne (50) puis retirer la machine perceuse (70) ;
f) relier la cloche (90) avec viseur au premier élément à vanne (50) et retirer la lame de fermeture (59) puis nettoyer les copeaux de perçage à l'aide de l'aimant et/ou du balais relié à la tige de nettoyage (93), utiliser la poignée de manoeuvre (95) puis la faire remonter ;
g) insérer la lame de fermeture (59) dans le premier élément à vanne (50) ;
h) retirer la cloche (90) avec viseur du premier élément à vanne (50) ;
i) répéter les opérations des lettres a), b), d), e), f), g) et h) pour le second raccord profilé (30) et le second élément de vanne (50) ;
j) relier la première cloche porte-obturateur (110) au premier élément à vanne (50) puis relier la seconde cloche porte-obturateur (110) au second élément à vanne (50) ;
k) raccorder le conduit de by-pass (121) de la première cloche porte-obturateur (110) au conduit de by-pass de la seconde cloche porte-obturateur (110) à travers un morceau de by-pass (4), entre la première et la seconde position le long de la colonne montante (2) car le flux de gaz est interrompu ;
l) retirer la lame de fermeture (59) du premier élément à vanne (50) et actionner le premier obturateur à expansion (130) inséré à l'intérieur de la cloche porte-obturateur (110) jusqu'à ce que la colonne (2) soit complètement bouchée, ensuite retirer la lame de fermeture (59) du second élément à vanne (50) et actionner le second obturateur à expansion (130) inséré à l'intérieur de la cloche porte-obturateur (110) jusqu'à ce que la colonne (2) soit complètement bouchée ;
m) nettoyer le morceau de conduit (2) sur lequel il faut intervenir en introduisant de l'air ou de l'azote à partir de la première vanne (150₁) de la première cloche porte-obturateur à travers un premier conduit (151₁) : ce morceau de conduit sera nettoyé lorsqu'il ne sortira que de l'air ou de l'azote à travers la seconde vanne (150₂) de la seconde cloche porte-obturateur ;
n) exécuter la même opération sur le second morceau de conduit (2) ;
o) recharger le morceau de conduit (2) sur lequel on vient d'intervenir en relâchant le premier obturateur et en laissant ouverte la seconde vanne (150₂) de la seconde cloche (110) ;
p) insérer la lame de fermeture (59) dans le premier et le second élément à vanne(50);
q) éliminer le morceau de by-pass (4) ;
r) retirer la première et la seconde cloche porte-obturateur (110), ainsi que le premier et le second obturateur à expansion (130) du premier et du second élément à vanne (50) ;
s) remplacer la broche porte-fraises (73) de la machine perceuse (70) par l'arbre porte-bouchons (77) ;
t) insérer à pression un bouchon interne (33) sur une extrémité de raccord de l'arbre porte-bouchons (77) ;
u) relier la machine perceuse (70) au premier et au second élément à vanne (50) ;
v) retirer la lame de fermeture (59) du premier et du second élément à vanne (50) ;
w) serrer le bouchon interne (33) sur le premier filetage du premier ou du second raccord profilé (30) ;
x) retirer la machine perceuse (70) puis le premier ou le second élément à vanne (50) du premier ou du second raccord profilé (30) ;
y) serrer la calotte externe de couverture relative (35) sur le second filetage (39) du collier extérieur (37) du premier ou du second raccord profilé (30) ;
z) répéter les opérations des lettres t) à o) pour les seconds ou les premiers éléments à vanne restants (50) ainsi que le second ou le premier raccord fileté (30).
